# EUROPEAN PATENT SPECIFICATION

(11) **EP 0 524 242 B1**
(45) Date of publication and mention of the grant of the patent: **21.12.1994**
(21) Application number: 91907881.6
(22) Date of filing: 02.04.1991
(51) Int. Cl.: B01D 53/22, B01D 53/26, B01D 61/36

(54) **MEMBRANE SEPARATION PROCESS FOR DEHYDRATING A GAS OR VAPOUR OR LIQUID MIXTURE BY PERVAPORATION OR VAPOUR PERMEATION**
MEMBRANTRENNPROZESS ZUR ENTWÄSSERUNG VON GAS, DAMPF ODER EINEM FLÜSSIGKEITSGEMISCH DURCH PERVAPORATION ODER DAMPFPERMEATION
PROCEDE DE SEPARATION UTILISANT UNE MEMBRANE POUR DESHYDRATER UN MELANGE DE GAZ, DE VAPEUR OU DE LIQUIDES PAR EVAPORATION A TRAVERS UNE MEMBRANE OU PAR PERMEATION DE VAPEUR

(30) Priority: 03.04.1990 NL 9000783
(43) Date of publication of application: 27.01.1993
(73) Proprietor: NEDERLANDSE ORGANISATIE VOOR TOEGEPAST-NATUURWETENSCHAPPELIJK ONDERZOEK TNO, 2595 CL Den Haag (NL)
(72) Inventor: HANEMAAIJER, Jan, Hendrik, NL-6862 AB Oosterbeek (NL); VERSTEEG, Wilhelmus, Francies, NL-3511 LX Utrecht (NL); JANSEN, Albert, Edward, NL-3992 RX Houten (NL); VAN ENGELENBURG, Bertus, NL-3703 EJ Zeist (NL)
(74) Representative: de Bruijn, Leendert C. (NL)
(86) International application number: NL9100054
(87) International publication number: WO9115284

(56) References cited:
- EP-A- 0 240 803
- EP-A- 0 308 002
- DE-C- 673 772
- GB-A- 2 025 256
- GB-B- 495 734
- GB-B- 1 207 704
- GB-B- 1 440 963
- US-A- 3 751 879
- US-A- 4 174 374
- US-A- 4 516 984
- THE CHEMICAL ENGINEER, PERVAPORATION HEADING FOR NEW HORIZONS, FEBRUARY 1990, PAGES 46-49

## Description

The invention relates to a membrane separation process for dehydrating a gas or vapour or liquid mixture by pervaporation or vapour permeation comprising: passing the mixture along the retentate side of a membrane and generating a driving force in order to transport water through the membrane to the permeate side thereof.

Such a membrane separation process is disclosed in GB-B-1440963.

In drying gases by water-selective vapour permeation membranes, the separation is usually based on dissolution and diffusion behaviour. The gas to be dried should be fed to the retentate side with a high pressure and/or partial vacuum should be applied to the permeate side in order to obtain sufficient driving force for the transport of water through the membrane. A disadvantage of this procedure is the usually relatively very high volume of the permeate compartment which is necessary to counteract pressure loss and, consequently, loss of driving force. Another important disadvantage is the frequently high loss of gas to be dehydrated, which occurs through permeation together with the water vapour. If gases are dehydrated under increased pressure, the gas separation membranes have to have a high mechanical strength in order to be resistant to this high pressure.

In vapour permeation and pervaporation processes, use is made of selective membranes which are frequently composed of a composite of a thick sieve-type base and a very thin compact membrane top layer. The driving force is generated by applying a pressure difference across the membrane, which is usually achieved by maintaining a vacuum (for example of less than 10 kPa) at the permeate side. The permeated water can be removed by inserting a condenser upstream of the vacuum pump. The disadvantage of this method is that, as a consequence of the poor mass transfer in the vacuum and the necessity of counteracting pressure drop, the permeate volume has to be very large. In a membrane module, usually only 1 to 10m² of membrane surface is installed per m³ of module volume. The proportion taken up by the equipment in the costs of a vapour permeation and pervaporation process is consequently relatively high (compare the compactness of a membrane module in reverse osmosis and gas separation processes: 100 to 500m² of membrane surface per m³ of module volume). This disadvantage of an unduly large membrane module exists even if a flushing gas such as nitrogen is passed along the permeate side of the membrane, which nitrogen is fed to a condenser in order to remove the water therefrom.

Another important disadvantage of the abovementioned processes is the relatively unfavourable coefficient of performance (COP), which is a measure of the energy efficiency of the water removal by means of a condenser. This is primarily due to the low energy efficiency in the cooling. Finally, the acquisition and maintenance costs of the equipment are high and the vacuum equipment is in general susceptible to malfunction.

The object of the invention is to avoid said disadvantages at least to a significant extent.

According to the invention the membrane separation process for dehydrating a gas or vapour or liquid mixture as mentioned in the preamble is therefore characterised in that the driving force is generated in that a highly concentrated solution of one or more hygroscopic salts (brine) is situated at the permeate side of the membrane, and that the hygroscopic capacity of said solution, expressed as a percentage of water vapour pressure reduction with respect to pure water, has a value of over 50%

According to the claims of GB-B-1440963 the fluid at the retentate side is one selected from benzene, isopropanol, sulphuric acid and ethylene glycol and must be relatively free of the component to be separated, which in case of dehydration is water. Therefore the process of the present invention is excluded.

Further GB-A-0495734 discloses a process of dehumidification of gases which comprises contacting the moist gas with a hygroscopic brine. A disadvantage is that the gas to be dehumidified may dissolve in the brine, which could lead to considerable losses.

The salts used in the brines are characterised by combinations of small cations and large anions or of large cations and small anions or of mixtures thereof, which combinations break up water structure. The anions and cations may be either inorganic or organic in nature. Owing to the stability at high temperatures, however, combinations of inorganic ions will be chosen in most cases.

The brine is removed continuously or discontinuously from the permeate side of the membrane, the water taken up by the brine is removed from the brine and the worked-up brine is fed back to the permeate side of the membrane.

Better results can be obtained if the mixture to be dehydrated is under increased pressure often and the brine is at essentially the same pressure.

If the process is continuous the permeated water is evaporated.

Preferably use is made of hollow fibre membranes and the highly concentrated solution of one or more hygroscopic salts is situated inside or outside the hollow fibres membranes.

If a moisture containing gas is passed in the outside of hollow H₂O-selective PPO gas separation fibre membranes, a brine is on the inside of the hollow membranes.

The invention could be applied to a mixture of azeotropic isopropyl alcohol and water which is dehydrated with the aid of a vapour permeation process, which mixture is passed on the outside of PPO hollow fibre membranes with a brine on the inside of the hollow membranes.

Preferably the brine is a concentrated solution of LiBr or ZnBr₂ or CaBr₂ or CsF.

If a liquid mixture of azeotropic butanol and water is dehydrated with the aid of a pervaporation process, the membrane is preferably a flat polyvinyl alcohol composite membrane between the permeate side and the retentate side.

The brines should have an appreciable hygroscopic capacity in order to be able to generate sufficient driving force. The required hygroscopic capacity will depend on the water activity of the gas, vapour or liquid mixture to be dehydrated. If said water activity is low, the hygroscopic capacity of the brine whould be high. The hygroscopic capacity may be expressed, for example, as the percentage by which a brine lowers the vapour pressure of water at a particular temperature. The table below gives the hygroscopic capacity of a number of salt solutions expressed as a percentage of water vapour pressure reduction in saturated solution a 25°C.

| Brine | Hygroscopic capacity (%) |
|---|---|
| K₂Cr₂O₇ | 2 |
| BaCl₂.2H₂O | 10 |
| KCl | 16 |
| KBr | 19 |
| NaCl | 25 |
| NH₄NO₃ | 38 |
| MgCl₂.6H₂O | 67 |
| Kc₂H₃O₂.1.5 H₂O | 78 |
| LiCl.H₂O | 89 |
| NaOH.H₂O | 93 |
| LiBr.2H₂O | 92 |
| CsF | > 95 |
| LiBr/ZnBr₂/CaBr₂ | 98 |

Brines which are suitable for use in the present invention will preferably have a hygroscopic capacity higher than 80%. This means that brines based on, for example, sodium chloride or potassium dichromate will not exhibit the desired effect.

Examples of brines having adequate hygroscopic capacity to be used in the membrane processes according to the invention are, inter alia, LiBr, CsF, KC₂H₃O₂, MgCl₂ and mixtures of, for example, LiBr/ZnBr₂/CaBr₂.

Making use of a highly concentrated solution of hygroscopic salts at the permeate side of gas separation, vapour permeation and pervaporation membranes achieves an appreciable improvement with respect to equipment design (high membrane surface area per m³ of module volume) and procedure. The brines reduce the water activities at the permeate side (vapour tensions of less than 1 kPa at a temperature of over 80°C achievable) in a manner such that a large driving force can be established across the membrane.

It is of importance that, during the dehydration of a gas and the dehydration of a vapour, the brine cannot come into contact with the gas or the vapour, respectively. In the event of direct contact, brine in the gas could be entrained by aerosol formation in the dehydrated gas or vapour, and this is extremely disadvantageous. This is an additional advantage of using a membrane which otherwise primarily has the aim of achieving the desired selectivity (sharpness of separation). In addition, the flexibility of the process increases sharply as a result of this: the flows of gas or vapour or of absorption liquid respectively may be varied independently over a wide range.

The invention can be used in the following membrane designs: tubular membranes (diameters of a few millimetres to a few centimetres), plate-type membranes (plate and frame), spirally wound membranes and hollow membrane fibres (hollow fat fibres: internal diameter greater than 500 µm and hollow fine fibres: internal diameter between 50 and 200 µm).

Although the permeate volume: membrane surface ratio is usually more than 0.1 m³/m² in known membrane dehydration processes, a value of less than 0.005 m³/m², and in most cases of less than 0.0005 m³/m², can be achieved by application of the invention. The compactness of the equipment can therefore be improved very considerably.

As a result of using the brine, a negligible pressure loss occurs at the permeate side, even if the permeate compartment is formed by the lumen of "hollow fine fibres". Apart from a high compactness, this guarantees maintenance of driving force and, consequently, of the permeate flux. This also implies that the permeate pressure (the driving force) can be very easily adjusted by regulating the water content of the brine. As a consequence of this, one particular design of an apparatus can be used in very many different applications. In order to use apparatuses according to the state of the art for various applications, the permeate circuit would have to be altered by intervention in order to guarantee optimum process conditions.

In principle, the brine can be brought to the same liquid pressure as the pressure of the gas or the vapour or liquid to be dehydrated at the retentate side of the membrane. As a result of this lower requirements are imposed on the pressure resistance/mechanical strength of the membranes.

Especially in regard to the use for dehydrating gases, the use of brine offers the possibility of considerably reducing the loss of gas through permeation; for this purpose, use is made of the often limited solubility of the gases to be dehydrated in, in particular, highly concentrated brines.

The evaporator, which is used with the aid of a distillation process for evaporating water out of the brine, may be connected to the apparatus. Evaporating water out of the brine demands less energy than the usual condensation in known membrane separation processes. The equipment is much simpler (no refrigeration technique, no vacuum pump which is susceptible to malfunction).

Because the volume of the permeate space can be considerably reduced, it has proved possible to conduct said processes satisfactorily using hollow fibres, the highly concentrated solution of one or more hygroscopic salts being situated inside the hollow fibres (permeate side) (diameter of, for example, 300 µm).

The invention will now be explained in more detail with reference to some examples.

### Example 1

A moistened nitrogen having a relative humidity of 75% is passed along an H₂O-selective gas separation membrane consisting of a hollow fibre of polyphenylene oxide (PPO). Situated at the permeate side (inside the hollow fibre) is a saturated NaCl solution. It was not possible to detect any marked water permeation (dehydration).

### Example 2

A moistened air having a relative humidity of 75% is dehydrated at a temperature of 25°C with the aid of a gas separation process. In this process, an H₂O-selective hollow gas separation membrane consisting of polyphenylene oxide (PPO) is used. Saturated CsF brine is situated inside the hollow fibres. At a gas speed of 1 m/sec along the outside of the fibre, virtually all the water is removed after a fibre length of only 25 cm.

### Example 3

An azeotropic mixture of isopropyl alcohol and water is dehydrated at a temperature of 90°C with the aid of a vapour permeation system, use being made of PPO hollow fibre membranes. Situated on the inside of the membranes is CsF brine. The permeate flux is approximately 0.3 kg/m².h.

### Example 4

An azeotropic mixture of isopropyl alcohol and water is dehydrated at a temperature of 90°C with the aid of a vapour permeation system. The equipment comprises PPO hollow fibre membranes, an LiBr/ZnBr₂/CaBr₂ brine being situated on the inside of the membranes. The vaporisation of the permeated water takes place at approximately 180°C in an evaporating element. The process is carried out continuously and stably for approximately 100 hours. The permeate flux is approximately 0.4 kg/m².h.

### Example 5

An azeotropic mixture of butanol and water is dehydrated at a temperature of 60°C with the aid of a pervaporation system. The equipment comprises a flat polyvinyl alcohol composite membrane. Situated at the permeate side is an LiBr/ZnBr₂/CaBr₂ brine. Permeation of water takes place with a flux of approximately 0.5 kg/m².h. The permeation of alcohol cannot be detected. It was not possible to detect any leakage of brine.

## Claims

1. Membrane separation process for dehydrating a gas or vapour or liquid mixture by pervaporation or vapour permeation comprising: passing the mixture along the retentate side of a membrane and generating a driving force in order to transport water through the membrane to the permeate side thereof characterised in that the driving force is generated in that a highly concentrated solution of one or more hygroscopic salts (brine) is situated at the permeate side of the membrane, and that the hygroscopic capacity of said solution, expressed as a percentage of water vapour pressure reduction with respect to pure water, has a value of over 50%.

2. Membrane separation process according to claim 1, characterised in that the brine salts contain combinations of small cations and large anions or of large cations and small anions or of mixtures thereof.

3. Membrane separation process according to one of the preceding claims, characterised in that the brines are inorganic in nature.

4. Membrane separation process according to one of the preceding claims, characterised in that the brine is removed continuously or discontinuously from the permeate side of the membrane, that the water taken up by the brine is removed from the brine and in that the worked-up brine is fed back to the permeate side of the membrane.

5. Membrane separation process according to one of the preceding claims, characterised in that the mixture to be dehydrated is under increased pressure and the brine is at essentially the same pressure.

6. Membrane separation process according to claim 4 or 5, characterised in that the process is continuous and in that the permeated water is evaporated.

7. Membrane separation process according to one of the preceding claims, characterised in that use is made of hollow fibre membranes and the highly concentrated solution of one or more hygroscopic salts is situated inside or outside the hollow fibres membranes.

8. Membrane separation process according to claim 7, characterised in that moisture-containing gas is passed on the outside of hollow H₂O-selective PPO gas separation fibre membranes with a brine on the inside of the hollow membranes.

9. Membrane separation process according to claim 5, characterised in that a mixture of azeotropic isopropyl alcohol and water is dehydrated with the aid of a vapour permeation process, which mixture is passed on the outside of PPO hollow fibre membranes with a brine on the inside of the hollow membranes.

10. Membrane separation process according to one of the preceding claims, characterised in that the brine is a concentrated solution of LiBr or ZnBr₂ or CaBr₂ or CsF.

11. Membrane separation process according to one of claims 1 to 3 inclusive, characterised in that a liquid mixture of azeotropic butanol and water is dehydrated with the aid of a pervaporation process, the membrane being a flat polyvinyl alcohol composite membrane between the permeate side and the retentate side.

## Patentansprüche

1. Membrantrennverfahren zur Entwässerung eines Gas-, Dampf- oder Flüssigkeitsgemisches durch Pervaporation oder Dampfpermeation mit den Schritten: Leiten des Gemisches entlang der Retentatseite einer Membran und Erzeugen einer Antriebskraft, um Wasser durch die Membran zur Permeatseite zu treiben, **dadurch gekennzeichnet**, daß die Antriebskraft dadurch erzeugt wird, daß sich eine hochkonzentrierte Lösung eines oder mehrerer hygroskopischer Salze (Sole) auf der Permeatseite der Membran befindet und daß die Hygroskopizität der Lösung, ausgedrückt als Reduktion des Dampfdruckes in Bezug auf reines Wasser in Prozent, einen Wert von über 50 % aufweist.

2. Membrantrennverfahren nach Anspruch 1, **dadurch gekennzeichnet**, daß die Solesalze Kombinationen von kleinen Kationen und großen Anionen oder von großen Kationen und kleinen Anionen oder eine Mischung hiervon enthalten.

3. Membrantrennverfahren nach einem der vorhergehenden Ansprüche, **dadurch gekennzeichnet**, daß die Solen anorganischer Natur sind.

4. Membrantrennverfahren nach einem der vorhergehenden Ansprüche, **dadurch gekennzeichnet**, daß die Sole kontinuierlich oder diskontinuierlich von der Permeatseite der Membran abgezogen wird, daß das von der Sole aufgenommene Wasser aus der Sole entfernt und daß die aufgearbeitete Sole zur Permeatseite der Membran zurückgeführt wird.

5. Membrantrennverfahren nach einem der vorhergehenden Ansprüche, **dadurch gekennzeichnet**, daß das zu entwässernde Gemisch unter erhöhtem Druck und die Sole unter im wesentlichen gleichem Druck stehen.

6. Membrantrennverfahren nach Anspruch 4 oder 5, **dadurch gekennzeichnet**, daß der Prozeß kontinuierlich ist und daß das permeierte Wasser verdampft wird.

7. Membrantrennverfahren nach einem der vorhergehenden Ansprüche, **dadurch gekennzeichnet**, daß Hohlfaser-Membranen verwendet werden und die hochkonzentrierte Lösung eines oder mehrerer hygroskopischer Salze sich innerhalb oder außerhalb der Hohlfaser-Membranen befindet.

8. Membrantrennverfahren nach Anspruch 7, **dadurch gekennzeichnet**, daß Feuchtigkeit enthaltendes Gas an der Außenseite von hohlen wasserselektiven PPO-Gastrennfasermembranen mit einer Sole auf der Innenseite der hohlen Membranen entlanggeführt wird.

9. Membrantrennverfahren nach Anspruch 5, **dadurch gekennzeichnet**, daß ein azeotropisches Gemisch von Isopropylalkohol und Wasser mit Hilfe eines Dampfpermeationsprozesses entwässert wird, bei dem das Gemisch an der Außenseite vom PPO-Hohlfaser-Membranen mit einer Sole an der Innenseite der hohlen Membranen entlanggeführt wird.

10. Membrantrennverfahren nach einem der vorhergehenden Ansprüche, **dadurch gekennzeichnet**, daß die Sole eine konzentrierte Lösung von LiBr oder ZnBr₂ oder CaBr₂ oder CsF ist.

11. Membrantrennverfahren nach einem der Ansprüche 1 bis 3, **dadurch gekennzeichnet**, daß ein azeotropes Flüssigkeitsgemisch von Butanol und Wasser mit Hilfe eines Pervaporationsprozesses entwässert wird, wobei die Membran eine flache Polyvinylalkohol-Composite-Membran zwischen der Permeat- und der Retentatseite ist.

## Revendications

1. Procédé de séparation par membrane pour déshydrater un mélange de gaz, de vapeurs ou de liquides par pervaporation ou perméation de vapeur, comprenant les stades suivants : on fait passer le mélange le long du côté rétentat d'une membrane et on génère une force d'entraînement pour acheminer de l'eau à travers la membrane vers son côté perméat, caractérisé en ce que la force d'entraînement est générée en faisant en sorte qu'une solution hautement concentrée d'un ou plusieurs sels hygroscopiques (saumure) soit située sur le côté perméat de la membrane et en que la capacité hygroscopique de ladite solution, exprimée en pourcentage de réduction de la pression de la vapeur d'eau par rapport à l'eau pure, ait une valeur de plus de 50 %.

2. Procédé de séparation par membrane selon la revendication 1, caractérisé en ce que les sels de saumure contiennent des combinaisons de petits cations et de gros anions ou de gros cations et de petits anions ou de leurs mélanges.

3. Procédé de séparation par membrane selon l'une quelconque des revendications précédentes, caractérisé en ce que les saumures sont de nature minérale.

4. Procédé de séparation par membrane selon l'une quelconque des revendications précédentes, caractérisé en ce que la saumure est évacuée en continu ou en discontinu du côté perméat de la membrane, l'eau absorbée par la saumure est éliminée de la saumure et la saumure traitée est recyclée au côté perméat de la membrane.

5. Procédé de séparation par membrane selon l'une quelconque des revendications précédentes, caractérisé en ce que le mélange à déshydrater est placé sous une pression supérieure et la saumure est sensiblement à la même pression.

6. Procédé de séparation par membrane selon la revendication 4 ou 5, caractérisé en ce que le processus est continu et l'eau qui a subi la perméation cet évaporée.

7. Procédé de séparation par membrane selon l'une quelconque des revendications précédentes, caractérisé en ce qu'on fait usage de membranes à fibres creuses et la solution hautement concentrée d'un ou plusieurs sels hygroscopiques est située à i'intérieur ou à l'extérieur des membranes à fibres creuses.

8. Procédé de séparation par membrane selon la revendication 7, caractérisé en ce que du gaz contenant de l'humidité est envoyé à l'extérieur des membranes à fibres de PPO creuses de séparation de gaz sélectives pour H₂O avec une saumure à l'intérieur des membranes creuses.

9. Procédé de séparation par membrane selon la revendication 5, caractérisé en ce qu'un mélange d'alcool isopropylique azéotropique et d'eau est déshydraté via un processus de perméation de vapeur, ledit mélange étant envoyé à l'extérieur des membranes de fibres creuses de PPO avec une saumure à l'intérieur des membranes creuses.

10. Procédé de séparation par membrane selon l'une quelconque des revendications précédentes, caractérisé en ce que la saumure est une solution concentrée de LiBr ou de ZnBr₂ ou de CaBr₂ ou de CsF.

11. Procédé de séparation par membrane selon l'une quelconque des revendications 1 à 3, caractérisé en ce qu'un mélange liquide de butanol azéotropique et d'eau est déshydraté via un processus de pervaporation, la membrane étant une membrane composite d'alcool polyvinylique plate disposée entre le côté perméat et le côté rétentat.
